# EUROPÄISCHE PATENTANMELDUNG

(11) **EP 1 859 863 A2**
(43) Veröffentlichungstag der Anmeldung: **28.11.2007**
(21) Anmeldenummer: 07009558.3
(22) Anmeldetag: 12.05.2007
(51) Int. Cl.: B01J 27/26, C08G 65/00

(54) **Verfahren zur konditionierung von Doppelmetallcyanid-Katalysatoren und Herstellung von Polyetherpolyolen**

(30) Priorität: 23.05.2006 DE 102006024025
(71) Anmelder: Bayer MaterialScience AG, 51368 Leverkusen (DE)
(72) Erfinder: Lorenz, Klaus, Dr., 41539 Dormagen (DE); Hofmann, Jörg, Dr., 47829 Krefeld (DE)

(57) **Zusammenfassung**

Gegenstand der vorliegenden Erfindung ist ein Verfahren zur Konditionierung von Doppelmetallcyanid-Katalysatoren, welche bei der Herstellung von Polyetherpolyolen auf Basis von Startern mit aktiven Wasserstoffatomen eingesetzt werden, die Herstellung von Polyetherpolyolen unter Verwendung der konditionierten Katalysatoren sowie die Verwendung der so hergestellten Polyetherpolyole zur Herstellung von Polyurethanwerkstoffen.

## Beschreibung

Gegenstand der vorliegenden Erfindung ist ein Verfahren zur Konditionierung von Doppelmetallcyanid-Katalysatoren ("DMC-Katalysatoren"), welche bei der Herstellung von Polyetherpolyolen auf Basis von Startern mit aktiven Wasserstoffatomen eingesetzt werden, die Herstellung von Polyetherpolyolen unter Verwendung der konditionierten Katalysatoren sowie die Verwendung der so hergestellten Polyetherpolyole zur Herstellung von Polyurethanwerkstoffen.

Für die Herstellung von Polyurethanwerkstoffen geeignete Polyetherpolyole können über verschiedene Herstellverfahren erhalten werden. Von großtechnischer Bedeutung ist zum einen die basisch katalysierte Anlagerung von Alkylenoxiden an Starterverbindungen mit Zerewitinoff-aktiven Wasserstoffatomen, zum anderen die Verwendung von Doppelmetallcyanidverbindungen als Katalysatoren für die Anlagerung von Alkylenoxiden an Starterverbindungen mit Zerewitinoff-aktiven Wasserstoffatomen. Die durch (Lewis-)Säuren katalysierte Anlagerung von Alkylenoxiden an geeignete Starterverbindungen ist von untergeordneter Bedeutung.

Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt in Gegenwart von Alkalimetallhydroxiden, Alkalimetallhydriden oder auch Aminen wie N,N-Dimethylbenzylamin oder Imidazol. Nach erfolgter Anlagerung der Alkylenoxide müssen die polymerisationsaktiven Zentren an den Polyetherketten mit verdünnten Mineralsäuren wie Schwefelsäure, Phosphorsäure oder auch organischen Säuren wie z. B. Milchsäure neutralisiert und die entstandenen Salze gegebenenfalls abgetrennt werden. Die Aufarbeitung der alkalischen Polymerisate ist auch unter Zuhilfenahme saurer Schichtsilikate oder mittels saurer Kationenaustauscher möglich. Bei aminisch katalysierten Alkylenoxidadditionsreaktionen kann auf eine weitere Aufarbeitung verzichtet werden, sofern die Anwesenheit der Amine in diesen Polyetherpolyolen die Herstellung von Polyurethanwerkstoffen nicht beeinträchtigt. Neben der Notwendigkeit, die Polyetherpolyole vor ihrem Einsatz als Polyurethankomponenten gegebenenfalls aufarbeiten zu müssen, sind zwei weitere Nachteile der basisch katalysierten Anlagerung von Alkylenxiden an Starterverbindungen mit Zerewitinoff-aktiven Wasserstoffatomen zu nennen. Über aminische Katalyse können nur Polyether mit verhältnismäßig niedrigen Äquivalentgewichten erhalten werden, siehe hierzu beispielsweise Ionescu et al. in "Advances in Urethane Science & Technology", 1998, 14, S. 151-218. Unter Alkalimetallhydroxidkatalyse nehmen bei steigender Molmasse des Polymerisates unerwünschte Nebenreaktionen deutlich zu. Insbesondere ist hier die Isomerisierung von Propylenoxid zu Allylalkohol zu nennen, die bei hohen Äquivalentgewichten (bzw. niedrigen OH-Zahlen) zu einem hohen Anteil monofunktioneller Polyetherspezies im Reaktionsgemisch führt. Die monofunktionellen Polyethermoleküle wirken sich nachteilig auf das Durchhärteverhalten und das physikalische Eigenschaftsprofil von Polyurethansystemen aus.

Durch den Einsatz der Doppelmetallcyanid-Katalysatoren ist es möglich geworden, die Addition von Alkylenoxiden, insbesondere Propylenoxid, an Starterverbindungen mit Zerewitinoff-aktiven Wasserstoffatomen bis zu sehr niedrigen OH-Zahlen voranzutreiben, ohne dass die oben erwähnte Isomerisierung von Propylenoxid zu Allylalkohol in nennenswertem Maße eintritt. Hochaktive DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen zudem eine außerordentlich hohe Aktivität und ermöglichen die Polyetherpolyolherstellung bei sehr geringen Katalysatorkonzentrationen (25 ppm oder weniger), so dass eine Abtrennung des Katalysators aus dem fertigen Produkt nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Ein Charakteristikum von DMC-Katalysatoren ist ihre ausgeprägte Empfindlichkeit gegen hohe Konzentrationen an Hydroxylgruppen, welche beispielsweise durch große Mengen an Startern wie Ethylenglykol, Propylenglykol, Glycerin, Trimethylolpropan, Sorbitol oder Saccharose hervorgerufen werden, und polare Verunreinigungen des Reaktionsgemisches. Die DMC-Katalysatoren können dann während der Reaktionsinitiierungsphase nicht in die polymerisationsaktive Form überführt werden. Verunreinigungen können beispielsweise Wasser, Verbindungen mit einer hohen Zahl in enger Nachbarschaft stehenden Hydroxylgruppen wie Kohlenhydrate und Kohlenhydratderivate oder Verbindungen mit basischen Gruppen wie beispielsweise Amine sein. Auch Substanzen mit in enger Nachbarschaft stehenden Carbonylgruppen bzw. zu Hydroxylgruppen benachbarten Carbonylgruppen wirken sich nachteilig auf die Katalysatoraktivität aus. Um Starter mit hohen Konzentrationen an OH-Gruppen, bzw. Starter mit als Katalysatorgiften anzusehenden Verunreinigungen dennoch DMC-katalysierten Alkylenoxidadditionsreaktionen unterziehen zu können, müssen die Hydroxylgruppenkonzentration gesenkt bzw. die Katalysatorgifte unschädlich gemacht werden. Hierzu wurden in der Vergangenheit aus diesen Starterverbindungen mittels basischer Katalyse zunächst Vorpolymerisate hergestellt, welche dann nach sorgfältiger Aufarbeitung mittels DMC-Katalyse in die erwünschten Alkylenoxidadditionsprodukte hoher Molmasse überführt werden konnten. Eine in diesem Zusammenhang wichtige Weiterentwicklung war die Entwicklung der kontinuierlichen Starterdosierung, die in WO 97/29146 offenbart ist. Hierbei werden kritische Starterverbindungen im Reaktor nicht vorgelegt, sondern neben den Alkylenoxiden dem Reaktor während der Reaktion kontinuierlich zugeführt. Als Startmedium für die Reaktion können in diesem Verfahren Vorpolymerisate vorgelegt werden, auch ist die Verwendung kleiner Mengen des herzustellenden Produktes selbst als Startmedium möglich. Die Notwendigkeit, für weitere Alkylenoxidadditionen geeignete Vorpolymerisate zunächst separat herstellen zu müssen, entfiel mit letzterer Vorgehensweise.

Sollen jedoch kurzkettige Polyetheralkohole mit OH-Zahlen größer 200 mg KOH/g erhalten werden, ist es notwendig, das Verhältnis von Starter zu Alkylenoxid im zudosierten Eduktstrom zu erhöhen, so dass wiederum die Gefahr besteht, kritische Konzentrationen an Hydroxylgruppen sowie polaren Verunreinigungen zu erreichen. In solchen Fällen verlieren die Katalysatoren während der Starterzudosierungsphase zunehmend an Aktivität, was sich z.B. durch einen Druckanstieg im Reaktor infolge steigender Konzentration an freiem Alkylenoxid bemerkbar macht.

Werden Verbindungen schwankender Reinheit, beispielsweise solche, die aus erneuerbaren Rohstoffquellen gewonnen werden, als Starter eingesetzt, können unbekannte Nebenkomponenten die Katalysatoraktivität ebenfalls signifikant beeinträchtigen. Hier kann der Katalysator entweder gar nicht in die wirksame Form überführt werden oder der oben geschilderte Aktivitätsverlust wird beobachtet.

Den geschilderten Problemen kann einerseits natürlich durch eine Erhöhung der Katalysatorkonzentration entgegengewirkt werden, andererseits kann auch versucht werden, die Starterverbindungen durch geeignete Vorbehandlungen wie intensives Strippen bei Temperaturen über 80°C, Destillieren oder Extrahieren von Verunreinigungen zu befreien. Alle diese Alternativen sind zeitraubend und kostenintensiv.

Die Aufgabe bestand daher darin, ein Verfahren für die Behandlung von DMC-Katalysatoren zu finden, welches erlaubt, im kontinuierlichen Starterzudosierungsverfahren hohe Verhältnisse von Starterverbindung zu Alkylenoxid zu dosieren und somit Polyetherpolyole mit OH-Zahlen größer 200 mg KOH/g problemlos, d.h. ohne aufwändige Vorbehandlung des vorgelegten Startmediums bzw. der zudosierten Starterverbindungen, zugänglich zu machen. Des Weiteren soll das Verfahren die Katalysatoren robust machen gegen Verunreinigungen jeglicher Art, die die Überführung des Katalysators in die polymerisationsaktive Form verhindern. Solche Verunreinigungen können beispielsweise in Starterverbindungen, die aus erneuerbaren Rohstoffquellen gewonnen werden, vorkommen.

Gegenstand der vorliegenden Erfindung ist ein Verfahren zur Konditionierung von Doppelmetallcyanid-Katalysatoren, bei dem diese bei Temperaturen von 0 bis 80°C, bevorzugt von 20 bis 60°C, in einem als Startmedium für die Alkoxylierungsreaktion verwendeten Vorprodukt mit einer OH-Zahl von 5 bis 500 mg KOH/g oder einem dem herzustellenden Reaktionsprodukt entsprechenden Polyetherpolyol über einen Zeitraum von 5 min bis 4 Stunden, bevorzugt von 15 min bis 2 Stunden unter Inertgasatmosphäre bei Drücken von 1 mbar bis 10 bar dispergiert werden. Bei dieser Vorbehandlung, im Folgenden als "Konditionierung" bezeichnet, können Alkylenoxide wie z.B. Propylenoxid und/oder Ethylenoxid zugegen sein. Wird in Gegenwart von Alkylenoxiden konditioniert, tritt die eigentliche Katalysatoraktivierung, welche sich durch einen beschleunigten Druckabfall im Reaktor bemerkbar macht, in der Konditionierungsphase noch nicht ein.

Weitere Gegenstände der vorliegenden Erfindung sind Verfahren zur Herstellung von Polyetherpolyolen, bei dem die erfindungsgemäß konditionierten Katalysatoren eingesetzt werden und die Verwendung der so hergestellten Polyetherpolyole zur Herstellung von Polyurethanwerkstoffen.

Die mit den konditionierten Katalysatoren hergestellten Polyetherpolyole weisen OH-Zahlen von 5 bis 500 mg KOH/g auf. Die Katalysatorkonzentration im Endprodukt beträgt üblicherweise 10 bis 1000 ppm. Die konditionierten DMC-Katalysatoren zeichnen sich durch eine hohe Katalysatoraktivität aus, welche über die gesamte Reaktionsdauer erhalten bleibt. Bei Durchführung des erfindungsgemäßen Verfahrens liegt der durch nicht abreagiertes Alkylenoxid erzeugte Partialdruck, welcher ein Indikator für die Katalysatoraktivität ist, bei sonst gleichen Verfahrensparametern deutlich niedriger als bei Verwendung von Verfahren des gegenwärtigen Standes der Technik. Auf diese Weise wird somit auch eine deutliche Erhöhung der Prozesssicherheit erzielt.

Das erfindungsgemäße Verfahren wird im Einzelnen wie folgt durchgeführt: Im Reaktor werden als Startmedium unter Inertgasatmosphäre, beispielsweise Stickstoff oder Edelgas, kleine Mengen eines Vorproduktes mit einer OH-Zahl von 5 bis 500 mg KOH/g vorgelegt. Die als Startmedium vorteilhaft eingesetzte Vorproduktmenge hängt von der jeweiligen Reaktor- und Rührergeometrie sowie der Auslegung der Heiz- und Kühlvorrichtung ab. Sie ist so zu wählen, dass das Reaktionsgemisch gut zu rühren ist, außerdem sollte die Reaktionswärme leicht abführbar, bzw. der Reaktorinhalt leicht aufheizbar sein. Als Vorprodukte können die unterschiedlichsten Verbindungen mit OH-Zahlen von 5 bis 500 mg KOH/g eingesetzt werden. Bevorzugte Vorprodukte sind z. B. Additionsprodukte aus niedermolekularen Starterverbindungen mit Zerewitinoff-aktiven Wasserstoffatomen und Alkylenoxiden, Polyesterpolyole oder Polycarbonatpolyole und hydroxylierte Triglyceride bzw. hydroxylierte Fettsäurederivate. Soll nach dem kontinuierlichen Starterzudosierungsverfahren gearbeitet werden, wird als Startmedium häufig eine kleine Menge einer früher hergestellten Charge des herzustellenden Produkts selbst verwendet. Da das erfindungsgemäße Katalysatorkonditionierungsverfahren im Temperaturbereich von 0 bis 80 °C durchgeführt wird, ist es gegebenenfalls angebracht, das Startmedium vor Zugabe des Katalysators bei Temperaturen über 80 °C beispielsweise durch Strippen mit Stickstoff oder Inertgasen von Wasserspuren zu befreien. Der hierfür geeignete Temperaturbereich ist nach oben hin nur durch die thermische Stabilität des Startmediums begrenzt. Es kann außerdem ein inertes organisches Lösungsmittel wie Toluol und/oder THF zugefügt werden, beispielsweise um die Viskosität des Startmediums zu senken. Die Menge an Lösungsmittel beträgt in solchen Fällen üblicherweise 10 Gew.-% bis 30 Gew.-%, bezogen auf die Gesamtmenge des Ansatzes. Bevorzugt wird ohne Lösungsmittel gearbeitet.

Der DMC-Katalysator wird dem Startmedium hinzugefügt. Seine auf die Endproduktmenge berechnete Konzentration beträgt 10 bis 1000 ppm. Dem, vorteilhafterweise durch Strippen mit Inertgasen bei 0 bis 80°C getrockneten, katalysatorhaltigen Startmedium kann nun bereits auch eine kleine Menge Alkylenoxid, bis zu 20 Gew.-% bezogen auf die Menge an eingesetztem Startmedium, zugesetzt werden.

Die Katalysatorkonditionierung erfolgt bei einer Temperatur von 0°C bis 80°C, bevorzugt von 20°C bis 60°C, durch Dispergieren des Katalysators im Startmedium für 5 min bis 4 Stunden, bevorzugt 15 min bis 2 Stunden. Bevorzugt erfolgt das Dispergieren durch Rühren des katalysatorhaltigen Startmediums. Die Rührerdrehzahl beträgt üblicherweise 40 bis 800 U/min. Weitere Möglichkeiten sind das Umpumpen des katalysatorhaltigen Startgemischs im Kreislauf, die Verwendung von statischen Mischern oder Strahldispergatoren oder das Dispergieren mittels Ultraschall. Sind noch keine leichtflüchtigen Alkylenoxide dosiert worden, kann das Startmedium innerhalb der Konditionierungszeit auch durch Evakuieren und/oder Strippen mit Inertgasen von niedermolekularen Verunreinigungen wie z.B. Wasser befreit werden. Üblicherweise wird für 15 bis 60 min gestrippt bzw. evakuiert.

Der Katalysator wird nun durch Erwärmen auf Temperaturen von 80 bis 160°C, bevorzugt 100 bis 140°C, ganz besonders bevorzugt 120 bis 140°C aktiviert. Hierzu werden, falls noch nicht in der Konditionierungsphase geschehen, 5 bis 20 Gew.-% Alkylenoxid, bezogen auf die Menge an Startmedium, in den Reaktor eingebracht. Die Zugabe des Alkylenoxides kann vor, während oder nach dem Aufheizen des Reaktorinhaltes auf die Aktivierungstemperatur geschehen. Die Aktivierung des Katalysators macht sich durch einen beschleunigten Abfall des Reaktordruckes bemerkbar, wodurch der beginnende Alkylenoxidumsatz angezeigt wird. Dem Reaktionsgemisch kann sodann die gewünschte Menge Alkylenoxid bzw. Alkylenoxidgemisch kontinuierlich zugeführt werden, wobei eine Reaktionstemperatur von 20 bis 200°C, bevorzugt aber von 50 bis 160°C gewählt wird. Ganz besonders bevorzugt wird als Reaktionstemperatur die Aktivierungstemperatur gewählt.

Soll dem Reaktor ein weiterer Starter oder ein weiteres Startergemisch nach dem kontinuierlichen Starterzudosierungsverfahren zugeführt werden, kann mit seiner Dosierung begonnen werden, wenn dem Startmedium 10 bis 60 Gew.-% Alkylenoxid oder Alkylenoxidgemisch, bezogen auf die Menge an Startmedium, bereits zugefügt wurden. Die Dosiergeschwindigkeit für weitere Starter oder Startergemische wird im Allgemeinen so gewählt, dass nach Ende der Starter(gemisch)-dosierung noch eine kleine Menge weiteres Alkylenoxid(gemisch) zum Erreichen der angestrebten OH-Zahl dosiert werden kann. Es ist aber auch möglich, Starter(gemisch)dosierung und Alkylenoxid(gemisch)dosierung gleichzeitig enden zu lassen.

In einer Variante der Herstellung von Polyetherpolyolen ist die Gesamtmenge der zur Polyetherpolyolherstellung eingesetzten Starterverbindungen bereits während der Konditionierung der DMC-Katalysatoren im Startmedium zugegen. Es wird dann nach Aktivierung des Katalysators nur noch Alkylenoxid(gemisch) kontinuierlich zudosiert.

Nach Ende der Alkylenoxid(gemisch)dosierung schließt sich eine Nachreaktionsphase an, in der die Abnahme der Konzentration an unreagiertem Alkylenoxid im Allgemeinen durch Überwachung des Drucks quantifiziert wird. Nach Erreichen von Druckkonstanz kann das Produkt, gegebenenfalls nach einer Ausheizphase, aus dem Reaktor abgelassen werden.

Eine wichtige Verfahrensalternative ist auch ein Verfahren zur vollkontinuierlichen Herstellung von Polyetherpolyolen, wie es in WO 98/03571 beschrieben ist. In diesem Verfahren muss neben Alkylenoxid und Startergemisch auch Katalysator kontinuierlich einem Reaktor zugeführt werden, in dem Alkoxylierungsbedingungen herrschen. Zu diesem Zweck wird nach dem oben geschilderten Verfahren der Katalysatorkonditionierung in Abwesenheit von Alkylenoxiden eine konzentrierte, 0,1 bis 10 Gew.-% konditionierten Katalysator enthaltende Dispersion hergestellt, welche dann im vollkontinuierlichen Polyetherpolyol-Herstellprozess dem Reaktor zugeführt wird.

Für das erfindungsgemäße Verfahren geeignete DMC-Katalysatoren sind im Prinzip bekannt. Wie bereits erwähnt, werden DMC-Katalysatoren vor allem für die Herstellung von Polyetherpolyolen durch Polyaddition von Alkylenoxiden an aktive Wasserstoffatome aufweisende Starterverbindungen verwendet (siehe z.B. US-A 3 404 109, US-A 3 829 505, US-A 3 941 849 und US-A 5 158 922), da der Einsatz der DMC-Katalysatoren eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren bewirkt. Außerdem überstehen basenempfindliche funktionelle Gruppen wie beispielsweise Carbonylfunktionen oder Estergruppen DMC-katalysierte Alkylenoxidadditionsreaktionen unversehrt. Verbesserte DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen zudem, wie bereits in den einleitenden Abschnitten erwähnt, eine außerordentlich hohe Aktivität und ermöglichen die Polyetherpolyolherstellung bei sehr geringen Katalysatorkonzentrationen (25 ppm oder weniger), so dass eine Abtrennung des Katalysators aus dem fertigen Produkt nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittleren Molekulargewicht größer als 500 g/mol enthalten.

Geeignete Alkylenoxide sind beispielsweise Ethylenoxid, Propylenoxid, 1,2- bzw. 2,3-Butylenoxid und Styroloxid. Bevorzugt werden Propylenoxid und Ethylenoxid einzeln oder als Gemische verwendet. Werden verschiedene Alkylenoxide verwendet, so können diese entweder als Mischung oder nacheinander zudosiert werden. Bei letzterer Dosierweise besitzen die Polyetherketten Blockstrukturen. Zum Erhalt definierter Blockstrukturen im erfindungsgemäßen Verfahren ist es jedoch notwendig, die kontinuierliche Starterzudosierung gemeinsam mit oder kurz vor Ende der Dosierung des ersten Alkylenoxidblocks zu beenden. Bevorzugt werden als Endblock reines Ethylenoxid oder Mischungen aus Propylenoxid und Ethylenoxid mit hohem Ethylenoxidanteil zudosiert, so dass die hergestellten Polyetherpolyole 40 bis 100 % primäre OH-Endgruppen aufweisen.

Weitere nach diesem Verfahren mit Alkylenoxiden copolymerisierbare Monomere sind beispielsweise Lactone, Lactide, Säureanhydride, cyclische Carbonate und Kohlendioxid. Ihre Verwendung wird beschrieben in US-A 3,538,043, US-A 4,500,704, US-A 5,032,671 und US-A 6,646,100.

Geeignete Starterverbindungen für das kontinuierliche Starterzudosierungsverfahren unter Verwendung von erfindungsgemäß konditionierten DMC-Katalysatoren weisen bevorzugt Funktionalitäten von 2 bis 8 auf. Beispiele sind Propylenglykol, Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Gegebenenfalls einsetzbare Mono- oder Polyamine sind Ethylendiamin, 1,3-Diaminopropan, 1,4-Diaminobutan, Hexamethylendiamin, Ethanolamin, Diethanolamin, Diethylentriamin, Anilin, Piperazin, die Isomere des Toluoldiamins und die Isomere des (Diaminodiphenyl)methans. Bevorzugt werden aminogruppenfreie Starter verwendet.

Als kontinuierlich zuzudosierende Starterverbindungen oder vorzulegende Startmedien sind auch Polyesterpolyole geeignet. Diese können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen hierfür beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäuremono und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 / 40-60 / 20-36 Gew.-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung solcher Polyesterpolyole können die organischen, aromatischen oder aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium, Argon und auch in der Schmelze bei Temperaturen von 150 bis 300°C, vorzugsweise 180 bis 230°C, gegebenenfalls unter vermindertem Druck bis zu den gewünschten Säure- und OH-Zahlen polykondensiert werden. Die Säurezahl ist bevorzugt kleiner als 10 mg KOH/g, vorzugsweise kleiner als 2,5 mg KOH/g.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Als kontinuierlich zuzudosierende Starterverbindungen oder vorzulegende Startmedien sind ferner Hydroxygruppen aufweisende Polycarbonate geeignet. Als Hydroxygruppen aufweisende Polycarbonate kommen solche der an sich bekannten Art in Betracht, die z.B. durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z.B. Diphenylcarbonat, Dimethylcarbonat sowie α-ω-Bischloroformiaten oder Phosgen hergestellt werden können.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Eine Möglichkeit zur Herstellung solcher Polyole besteht in der Addition von Alkylenoxiden an hydroxylierte Triglyceride wie beispielsweise hydroxyliertes Sojaöl oder hydroxyliertes Rapsöl. Solche Starter können besonders vorteilhaft nach dem erfindungsgemäßen Verfahren mit Alkylenoxiden zur Reaktion gebracht werden. Es können natürlich auch andere Fettsäurederivate wie beispielsweise Fettsäuremonoalkylester hydroxyliert und im erfindungsgemäßen Prozess eingesetzt werden. Die hydroxylierten Triglyceride und/oder hydroxylierten Fettsäurederivate können sowohl als Startmedium vorgelegt als auch als Starter während der Alkylenoxiddosierphase dem Reaktor kontinuierlich zugeführt werden.

Alle Starterverbindungen oder Startmedien können einzeln oder als Gemische eingesetzt werden. Den Starterverbindungen und/oder dem Startmedium können außerdem geringe Mengen (1 bis 500 ppm) organischer oder anorganischer Säuren zugesetzt werden, wie in WO 99/14258 beschrieben.

Ein wesentliches Merkmal der vorliegenden Erfindung ist die durch die Konditionierung erreichbare verringerte Empfindlichkeit des DMC-Katalysators gegen viele Arten von Verunreinigungen im Starter(gemisch) bzw. im Startmedium. Somit können aufwändige Reinigungsoperationen am Starter(gemisch) oder dem Startmedium in vielen Fällen auf ein Minimum reduziert oder gänzlich vermieden werden. Beispielsweise reagiert der DMC-Katalysator auch bei hohen Verhältnissen von Starter(gemisch) zu Alkylenoxid im zudosierten Eduktstrom wenig empfindlich auf Wasser im Starter(gemisch); die durchweg hohe Katalysatoraktivität auch bei verhältnismäßig geringen Katalysatormengen zeigt sich in geringen Alkylenoxidpartialdrücken während der Reaktion.

Den nach dem erfindungsgemäßen Verfahren erhältlichen Polyolen können gegebenenfalls Alterungsschutzmittel wie z. B. Antioxidantien zugesetzt werden.

Die Polyole können allein oder gegebenenfalls im Gemisch mit weiteren isocyanatreaktiven Komponenten mit organischen Polyisocyanaten, gegebenenfalls in Gegenwart von Treibmitteln, in Gegenwart von Katalysatoren und gegebenenfalls mit weiteren Zusatzstoffen wie z.B. Zellstabilisatoren zur Reaktion gebracht werden und so als Komponenten von massiven oder geschäumten Polyurethanwerkstoffen dienen.

### Beispiele

### Eingesetzte Rohstoffe

### Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in EP-A 700 949.

### Polyol A

Trifunktioneller Polyether der OH-Zahl 238, erhalten durch Anlagerung von Propylenoxid an Glycerin.

### Polyol B

Difunktioneller Polyether der OH-Zahl 260, erhalten durch Anlagerung von Propylenoxid an Propylenglykol

### Polyol C

Trifunktioneller Polyether der OH-Zahl 56, erhalten durch Anlagerung von Propylenoxid an Glycerin. Polyol C enthielt 200 ppm Phosphorsäure.

### Herstellung von hydroxyliertem Rapsöl (Polyol D):

Unter Stickstoffatmosphäre wurden in einem Glaskolben 3050 g aus 00-Raps gewonnenem Rapsöl (Erucasäuregehalt: 0,3 Gew.-%, Gehalt an freien Fettsäuren: 0,6 Gew.-%, Iodzahl: 117 g Iod /100 g, erhalten von Campa Biodiesel, Ochsenfurt, Deutschland), vorgelegt und auf 70°C erwärmt. Über zwei Tropftrichter wurden nun über einen Zeitraum von 7 h 370,4 g Ameisensäure und 457,7 g Wasserstoffperoxid (als 50%ige Lösung in Wasser) in jeweils 7 gleichen Portionen zugegeben. Man dosierte direkt nach einer Ameisensäureportion die jeweilige Wasserstoffperoxidportion. Nach Zugabe der letzten Portion ließ man 1 h bei 70°C nachreagieren und erwärmte das Reaktionsgemisch sodann für 4 h auf Rückflusstemperatur (105°C). Der Oxiransauerstoffgehalt betrug 0,051 Gew.-%. Nach Abdestillation von Wasser und nicht umgesetzter Ameisensäure heizte man das Produkt 3 h bei 110°C und 1 mbar Druck aus. Die OH-Zahl des hydroxylierten Rapsöls betrug 149,8 mg KOH/g, seine Säurezahl betrug 5,63 mg KOH/g.

### Beispiel 1

750 g Polyol A wurden in einem 10 l Autoklaven mit 0,39 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Anschließend wurde der Reaktorinhalt bei 60°C und 100 mbar noch 60 min gerührt. Danach wurde auf 130°C erwärmt und 80 g Propylenoxid mit einer Dosierrate von 200 g/h in den Reaktor gegeben, wobei der Druck auf 1,2 bar anstieg. Die nachfolgende Aktivierung des DMC-Katalysators machte sich durch einen beschleunigten Druckabfall bemerkbar. Weitere 4484,8 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,3 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 23 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,4 bar. Die OH-Zahl des Produktes betrug 235,3 mg KOH/g.

### Beispiel 2

750,9 g Polyol A wurden in einem 10 l Autoklaven mit 0,39 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Anschließend wurde der Reaktorinhalt bei 60°C und 100 mbar noch 30 min gerührt. Danach wurde auf 130°C erwärmt und 80 g Propylenoxid mit einer Dosierrate von 250 g/h in den Reaktor gegeben, wobei der Druck auf 1,2 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,6 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 1 h bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,65 bar. Die OH-Zahl des Produktes betrug 234,9 mg KOH/g.

### Beispiel 3

751 g Polyol A wurden in einem 10 l Autoklaven mit 0,39 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Danach wurde auf 130°C erwärmt und 80 g Propylenoxid mit einer Dosierrate von 250 g/h in den Reaktor gegeben, wobei der Druck auf 0,8 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 640 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 30 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,65 bar. Die OH-Zahl des Produktes betrug 235,7 mg KOH/g.

### Beispiel 4

752,9 g Polyol A wurden in einem 10 l Autoklaven mit 0,39 g DMC-Katalysator versetzt. Der Reaktorinhalt wurde sodann bei 20°C unter Rühren (450 U/min) 30 min lang unter Durchleiten von Stickstoff (50 ml/min) gestrippt. Anschließend wurde der Reaktorinhalt bei 20°C und 100 mbar noch 3 h gerührt. Danach wurde auf 130°C erwärmt und 80 g Propylenoxid mit einer Dosierrate von 250 g/h in den Reaktor gegeben, wobei der Druck auf 1,4 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 640 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 40 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 0,95 bar. Die OH-Zahl des Produktes betrug 236,0 mg KOH/g.

### Beispiel 5

754 g Polyol A wurden in einem 10 l Autoklaven mit 0,39 g DMC-Katalysator versetzt. Der Reaktorinhalt wurde sodann bei 20°C unter Rühren (450 U/min) 30 min lang unter Durchleiten von Stickstoff (50 ml/min) gestrippt. Anschließend wurde der Reaktorinhalt bei 20°C und 100 mbar noch 114 min gerührt. Danach wurde auf 130°C erwärmt und 80 g Propylenoxid mit mit einer Dosierrate von 250 g/h in den Reaktor gegeben, wobei der Druck auf 1,7 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46,2 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,9 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 33 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,1 bar. Die OH-Zahl des Produktes betrug 235,2 mg KOH/g.

### Beispiel 6 (Vergleich)

750,3 g Polyol A wurden in einem 10 l Autoklaven mit 0,39 g DMC-Katalysator versetzt. Der Reaktorinhalt wurde sodann bei 130°C unter Rühren (450 U/min) 30 min lang unter Durchleiten von Stickstoff (50 ml/min) gestrippt. Sodann wurden bei 130°C 80 g Propylenoxid mit einer Dosierrate von 250 g/h in den Reaktor gegeben. Bereits nach Dosierung von 30 g Propylenoxid (erreichtes Druckmaximum: 0,5 bar) aktivierte der Katalysator, was sich durch einen beschleunigten Druckabfall bemerkbar machte. Weitere 4484,5 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,4 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 30 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 3,03 bar. Die OH-Zahl des Produktes betrug 235,6 mg KOH/g.

### Beispiel 7

750,6 g Polyol A wurden in einem 10 l Autoklaven mit 0,39 g DMC-Katalysator versetzt. Der Reaktorinhalt wurde sodann bei 60°C unter Rühren (450 U/min) 30 min lang unter Durchleiten von Stickstoff (50 ml/min) gestrippt. Anschließend wurden 80 g Propylenoxid bei 60°C mit einer Dosierrate von 250 g/h in den Reaktor gegeben. Hierbei stieg der Druck auf 0,7 bar an. Der Reaktorinhalt wurde dann bei diesem Druck und 60°C noch 90 min gerührt. Danach wurde auf 130°C erwärmt, wobei der Druck auf 2,15 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,3 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 24 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,15 bar. Die OH-Zahl des Produktes betrug 236,2 mg KOH/g.

### Beispiel 8 (Vergleich)

749,8 g Polyol A wurden in einem 10 l Autoklaven mit 0,541 g DMC-Katalysator versetzt. Der Reaktorinhalt wurde sodann bei 130°C unter Rühren (450 U/min) 30 min lang unter Durchleiten von Stickstoff (50 ml/min) gestrippt. Sodann wurden bei 130°C 80 g Propylenoxid mit einer Dosierrate von 250 g/h in den Reaktor gegeben. Bereits nach Dosierung von 35 g Propylenoxid (erreichtes Druckmaximum: 0,65 bar) aktivierte der Katalysator, was sich durch einen beschleunigten Druckabfall bemerkbar machte. Weitere 4484,8 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46,2 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 640,0 g Glycerin (enthaltend 1.000 ppm Wasser und 75 ppm Phosphorsäure) mit einer konstanten Dosierrate von 177,5 g/h gestartet. Nach Ende der Propylenoxidzudosierung ließ man noch 39 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 0,7 bar. Die OH-Zahl des Produktes betrug 235,5 mg KOH/g.

### Beispiel 9

749,9 g Polyol A wurden in einem 10 l Autoklaven mit 0,37 g DMC-Katalysator versetzt. Der Reaktorinhalt wurde sodann bei 20°C unter Rühren (450 U/min) 15 min lang unter Durchleiten von Stickstoff (50 ml/min) gestrippt. Danach wurde auf 130°C erwärmt und 80 g Propylenoxid mit mit einer Dosierrate von 250 g/h in den Reaktor gegeben, wobei der Druck auf 2,2 bar anstieg. Die nachfolgende Aktivierung des DMC-Katalysators machte sich durch einen beschleunigten Druckabfall bemerkbar. Weitere 4484,8 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46,0 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,3 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 30 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,12 bar. Die OH-Zahl des Produktes betrug 238,2 mg KOH/g.

### Beispiel 10

750,1 g des Produktes aus Beispiel 9 wurden in einem 10 l Autoklaven mit 0,36 g DMC-Katalysator versetzt. Der Reaktorinhalt wurde sodann bei 20°C unter Rühren (450 U/min) 15 min lang unter Durchleiten von Stickstoff (50 ml/min) gestrippt. Danach wurde auf 130°C erwärmt und 80 g Propylenoxid mit mit einer Dosierrate von 250 g/h in den Reaktor gegeben, wobei der Druck auf 2,0 bar anstieg. Die nachfolgende Aktivierung des DMC-Katalysators machte sich durch einen beschleunigten Druckabfall bemerkbar. Weitere 4484,9 g Propylenoxid wurden nach erfolgter Katalysatoraktivierung mit konstant 1087 g/h in den Autoklav dosiert. Nach Dosierung von insgesamt 100 g Propylenoxid (inklusive der zur Katalysatoraktivierung eingesetzten Menge) wurde die Dosierung von 46,1 g Propylenglykol (enthaltend 750 ppm Wasser) mit einer konstanten Dosierrate von 22,75 g/h gestartet. Nach Dosierung von insgesamt 250 g Propylenoxid (inklusive der zur Katalysatoraktivierung eingesetzten Menge) wurde die Dosierung von 639,3 g Glycerin (enthaltend 2.000 ppm Wasser und 75 ppm Phosphorsäure) mit einer konstanten Dosierrate von 177,5 g/h gestartet. Nach Ende der Propylenoxidzudosierung ließ man noch 40 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,12 bar. Die OH-Zahl des Produktes betrug 235,1 mg KOH/g.

In der nachfolgenden Tabelle sind die Versuchsparameter und die Versuchsergebnisse der Beispiele 1 bis 10 zusammengefasst.

| **Beispiel** | **Konditionierung** | **Konditionierungs-temperatur [°C]** | **Konditionierungszeit [min]** | **Katalysatorkonzentration [ppm] bez. auf Endprodukt** | **Wasser im Glycerin [ppm]** | **OH-Zahl [mg KOH/g]** | **Max. Propylenoxidpartialdruck [bar]** |
|---|---|---|---|---|---|---|---|
| 1 | Ja | 60 | 90 | 65 | 2000 | 235,3 | 1,4 |
| 2 | Ja | 60 | 60 | 65 | 2000 | 234,9 | 1,65 |
| 3 | Ja | 60 | 30 | 65 | 2000 | 235,7 | 1,65 |
| 4 | Ja | 20 | 210 | 65 | 2000 | 236,0 | 0,95 |
| 5 | Ja | 20 | 144 | 65 | 2000 | 235,2 | 1,10 |
| 6 (Vergleich) | Nein | - | - | 65 | 2000 | 235,6 | 3,03 |
| 7* | Ja | 60 | 120 | 65 | 2000 | 236,2 | 1,15 |
| 8 (Vergleich) | Nein | - | - | 90 | 1000 | 235,5 | 0,70 |
| 9 | Ja | 20 | 15 | 62 | 2000 | 238.2 | 1.12 |
| 10 | Ja | 20 | 15 | 68 | 2000 | 235.1 | 1.12 |

| | | | | | | | |
|---|---|---|---|---|---|---|---|
| * Bei diesem Versuch wurde Propylenoxid bereits während der Konditionierungsphase in den Reaktor gegeben | | | | | | | |

Das Vergleichsbeispiel 8 zeigt, dass durch Erhöhung der Katalysatormenge und Trocknung des Glycerins auch ohne Anwendung des Konditionierungsverfahrens ein glatter Reaktionsverlauf, erkennbar am verhältnismäßig geringen Propylenoxidpartialdruck, erreichbar ist. Ein solches Verfahren ist natürlich aufgrund der vorgeschalteten Reinigungsoperation sowie der hohen einzusetzenden Katalysatormenge nicht erwünscht.

### Beispiel 11

300 g Polyol C wurden in einem 10 l Autoklaven mit 0,24 g DMC-Katalysator versetzt. Der Reaktorinhalt wurde sodann unter Rühren (450 U/min) 30 min lang unter Durchleiten von Stickstoff (50 ml/min) bei 60°C gestrippt. Danach wurde der Reaktorinhalt noch 90 min bei 60°C und 100 mbar gerührt. Danach wurde auf 130°C erwärmt und ein Gemisch aus 3,3 g Ethylenoxid und 27,7 g Propylenoxid zudosiert. Hierbei stieg der Druck auf 1,6 bar an. Die nachfolgende Aktivierung des DMC-Katalysators machte sich durch einen beschleunigten Druckabfall bemerkbar. Nach erfolgter Katalysatoraktivierung wurde ein Gemisch aus 127,4 g Ethylenoxid und 1042,4 g Propylenoxid mit einer konstanten Dosierrate von 601,1 g/h in den Autoklav dosiert. Nach Dosierung von insgesamt 100 g Alkylenoxidgemisch (inklusive der zur Katalysatoraktivierung eingesetzten Menge) wurde die Dosierung von 897,7 g Polyol D mit einer konstanten Dosierrate von 600 g/h gestartet. Nach Ende der Alkylenxidgemischzudosierung ließ man noch 45 min bei 130°C nachreagieren und heizte das Produkt schließlich bei 130°C im Vakuum 30 min aus. Der maximale Alkylenoxidpartialdruck, ermittelt aus der Differenz zwischen dem maximalen Reaktordruck und dem am Ende der Nachreaktionsphase erreichten Druckniveau, betrug 1,02 bar. Die OH-Zahl des Produktes betrug 63,1 mg KOH/g.

### Beispiel 12 (Vergleich)

300 g Polyol C wurden in einem 10 l Autoklaven mit 0,25 g DMC-Katalysator versetzt. Der Reaktorinhalt wurde sodann unter Rühren (450 U/min) 30 min lang unter Durchleiten von Stickstoff (50 ml/min) bei 130°C gestrippt. Sodann wurde ein Gemisch aus 3,3 g Ethylenoxid und 27,7 g Propylenoxid zudosiert. Hierbei stieg der Druck auf 1,5 bar an. Die nachfolgende Aktivierung des DMC-Katalysators machte sich durch einen beschleunigten Druckabfall bemerkbar. Nach erfolgter Katalysatoraktivierung wurde ein Gemisch aus 127,4 g Ethylenoxid und 1042,4 g Propylenoxid mit einer konstanten Dosierrate von 601,1 g/h in den Autoklav dosiert. Nachdem nach Dosierung von insgesamt 100 g Alkylenoxidgemisch (inklusive der zur Katalysatoraktivierung eingesetzten Menge) mit der Dosierung von 897,7 g Polyol D mit einer konstanten Dosierrate von 600 g/h begonnen worden war, stieg der Druck im Reaktor schnell auf einen Wert von 4,2 bar an. Auf diesem Druckniveau, es waren zu diesem Zeitpunkt 40,6 g Ethylenoxid und 331,5 g Propylenoxid eindosiert, wurde die Dosierung des Alkylenoxidgemisches abgebrochen. Während der 3-stündigen Nachreaktionsphase sank der Reaktordruck nur auf 3,5 bar ab, was auf eine völlige Katalysatordesaktivierung hindeutete. Der Versuch wurde daraufhin abgebrochen.

### Beispiel 13

300,6 g des Produktes aus Beispiel 9, enthaltend 100 ppm DMC-Katalysator aus seiner Herstellung, wurden in einem 10 l Autoklaven mit 0,24 g DMC-Katalysator versetzt. Der Reaktorinhalt wurde sodann unter Rühren (450 U/min) 30 min lang unter Durchleiten von Stickstoff (50 ml/min) bei 60°C gestrippt. Danach wurde der Reaktorinhalt noch 90 min bei 60°C und 100 mbar gerührt. Danach wurde auf 130°C erwärmt und ein Gemisch aus 3,3 g Ethylenoxid und 27,7 g Propylenoxid zudosiert. Hierbei stieg der Druck auf 1,3 bar an. Die nachfolgende Aktivierung des DMC-Katalysators machte sich durch einen beschleunigten Druckabfall bemerkbar. Nach erfolgter Katalysatoraktivierung wurde ein Gemisch aus 128,9 g Ethylenoxid und 1042,3 g Propylenoxid mit einer konstanten Dosierrate von 601,1 g/h in den Autoklav dosiert. Nach Dosierung von insgesamt 100 g Alkylenoxidgemisch (inklusive der zur Katalysatoraktivierung eingesetzten Menge) wurde die Dosierung von 905,8 g Polyol D mit einer konstanten Dosierrate von 600 g/h gestartet. Nach Ende der Alkylenxidgemischzudosierung ließ man noch 105 min bei 130°C nachreagieren und heizte das Produkt schließlich bei 130°C im Vakuum 30 min aus. Der maximale Alkylenoxidpartialdruck, ermittelt aus der Differenz zwischen dem maximalen Reaktordruck und dem am Ende der Nachreaktionsphase erreichten Druckniveau, betrug 1,06 bar. Die OH-Zahl des Produktes betrug 63,3 mg KOH/g.

### Beispiel 14

300,8 g Polyol C und 898,7 g Polyol D wurden in einem 10 l Autoklaven mit 0,24 g DMC-Katalysator versetzt. Der Reaktorinhalt wurde sodann unter Rühren (450 U/min) 30 min lang unter Durchleiten von Stickstoff (50 ml/min) bei 60°C gestrippt. Danach wurde der Reaktorinhalt noch 90 min bei 60°C und 100 mbar gerührt. Sodann wurde auf 130°C erwärmt und ein Gemisch aus 20,0 g Ethylenoxid und 100,0 g Propylenoxid zudosiert. Hierbei stieg der Druck auf 3 bar an. Die nachfolgende Aktivierung des DMC-Katalysators machte sich durch einen beschleunigten Druckabfall bemerkbar. Nach erfolgter Katalysatoraktivierung wurde ein Gemisch aus 112,3 g Ethylenoxid und 950,6 g Propylenoxid mit einer konstanten Dosierrate von 501 g/h in den Autoklav dosiert. Nach Ende der Alkylenxidgemischzudosierung ließ man noch 40 min bei 130°C nachreagieren und heizte das Produkt schließlich bei 130°C im Vakuum 30 min aus. Der maximale Alkylenoxidpartialdruck, ermittelt aus der Differenz zwischen dem maximalen Reaktordruck, der in diesem Falle kurz vor der Katalysatoraktivierung erreicht wurde, und dem am Ende der Nachreaktionsphase erreichten Druckniveau, betrug 2,4 bar. Die OH-Zahl des Produktes betrug 63,2 mg KOH/g.

In der nachfolgenden Tabelle sind die Versuchsparameter und die Versuchsergebnisse der Beispiele 11 bis 14 zusammengefasst.

| **Beispiel** | **Konditionierung** | **Konditionierungstemperatur [°C]** | **Konditionierungszeit [min]** | **Katalysatorkonzentration [ppm] bez. auf Endprodukt** | **OH-Zahl [mg KOH/g]** | **Max. Propylenoxidpartialdruck [bar]** |
|---|---|---|---|---|---|---|
| 11 | Ja | 60 | 120 | 100 | 63,1 | 1,02 |
| 12 (Vergleich) | Nein | - | - | 100 | Reaktionsabbruch | Reaktionsabbruch |
| 13 | Ja | 60 | 120 | 112 | 63,3 | 1,06 |
| 14* | Ja | 60 | 120 | 100 | 63,2 | 2,4 |

| | | | | | | |
|---|---|---|---|---|---|---|
| * Bei diesem Versuch wurden im Gegensatz zu Beispiel 11 alle Starterverbindungen vor Beginn der Epoxiddosierung im Reaktor vorgelegt. | | | | | | |

### Beispiel 15

666,6 g Polyol B wurden in einem 10 l Autoklaven mit 0,41 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Anschließend wurden 66,6 g Propylenoxid bei 60°C in den Reaktor gegeben. Hierbei stieg der Druck auf 0,6 bar an. Der Reaktorinhalt wurde dann bei diesem Druck und 60°C noch 60 min gerührt. Danach wurde auf 130°C erwärmt, wobei der Druck auf 1,8 bar anstieg. Die nachfolgende Aktivierung des DMC-Katalysators machte sich durch einen beschleunigten Druckabfall bemerkbar. Weitere 2435,7 g Propylenoxid wurden nach erfolgter Katalysatoraktivierung mit konstant 648,3 g/h in den Autoklav dosiert. Nach Dosierung von insgesamt 150 g Propylenoxid (inklusive der zur Katalysatoraktivierung eingesetzten Menge) wurde die Dosierung von 831,2 g Propylenglykol (enthaltend 250 ppm Wasser und 106 ppm Phosphorsäure) mit einer konstanten Dosierrate von 250 g/h gestartet. Nach Ende der Propylenoxidzudosierung ließ man noch 40 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,26 bar. Die OH-Zahl des Produktes betrug 347,7 mg KOH/g.

### Beispiel 16 (Vergleich)

666,6 g Polyol B wurden in einem 10 l Autoklaven mit 0,41 g DMC-Katalysator versetzt. Der Reaktorinhalt wurde sodann unter Rühren (450 U/min) 30 min lang unter Durchleiten von Stickstoff (50 ml/min) bei 130°C gestrippt. Anschließend wurden 66,6 g Propylenoxid mit einer Dosierrate von 250 g/h bei 130°C in den Reaktor gegeben. Während der Dosierung dieser Propylenoxidmenge stieg der Druck zwischenzeitlich auf 1,5 bar an, der DMC-Katalysator aktivierte bereits in dieser Phase, was sich durch einen beschleunigten Druckabfall bemerkbar machte. Es war beabsichtigt, weitere 2436,3 g Propylenoxid mit einer konstanten Dosierrate von 648,3 g/h in den Autoklav zu dosieren. Nach Dosierung von insgesamt 150 g Propylenoxid (inklusive der zur Katalysatoraktivierung eingesetzten Menge) wurde mit der Dosierung von 831,07 g Propylenglykol (enthaltend 250 ppm Wasser) mit einer konstanten Dosierrate von 250 g/h begonnen. Der Druck im Reaktor stieg rasch auf einen Wert von 1,62 bar an. Die Propylenoxid- und Propylenglykoldosierung wurde daraufhin unterbrochen. Nach einer Nachreaktionsphase von 50 min wurden die Propylenoxid- und Propylenglykoldosierung bei einem Druck von 0,48 bar erneut mit den oben genannten Dosierraten gestartet. Der Reaktordruck stieg deutlich steiler als zuvor auf 1,8 bar an, woraufhin beide Dosierströme wieder gestoppt wurden. In der anschließenden Nachreaktionsphase von 70 min Dauer fiel der Druck langsam auf 0,8 bar ab. Zu diesem Zeitpunkt, es waren insgesamt lediglich 469 g Propylenoxid eindosiert worden, wurde der Versuch abgebrochen.

### Beispiel 17

666,0 g Produkt aus Beispiel 15, enthaltend 103 ppm DMC-Katalysator aus seiner Herstellung, wurden in einem 10 l Autoklaven mit 0,41 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Anschließend wurden 66,6 g Propylenoxid bei 60°C in den Reaktor gegeben. Hierbei stieg der Druck auf 0,6 bar an. Der Reaktorinhalt wurde dann bei diesem Druck und 60°C noch 60 min gerührt. Danach wurde auf 130°C erwärmt, wobei der Druck auf 2,0 bar anstieg. Die nachfolgende Aktivierung des DMC-Katalysators machte sich durch einen beschleunigten Druckabfall bemerkbar. Weitere 2474,8 g Propylenoxid wurden nach erfolgter Katalysatoraktivierung mit konstant 675,5 g/h in den Autoklav dosiert. Nach Dosierung von insgesamt 150 g Propylenoxid (inklusive der zur Katalysatoraktivierung eingesetzten Menge) wurde die Dosierung von 792,0 g Propylenglykol (enthaltend 280 ppm Wasser und 106 ppm Phosphorsäure) mit einer konstanten Dosierrate von 250 g/h gestartet. Nach Ende der Propylenoxidzudosierung ließ man noch 28 min bei 130 °C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 1,5 bar. Die OH-Zahl des Produktes betrug 347,6 mg KOH/g.

### Beispiel 18

334,9 g Produkt aus Beispiel 17, enthaltend 120 ppm DMC-Katalysator aus seiner Herstellung, wurden in einem 10 l Autoklaven mit 0,40 g DMC-Katalysator versetzt. Der Reaktorinhalt wurde sodann auf 60°C aufgeheizt und unter Rühren (450 U/min) 30 min lang unter Durchleiten von Stickstoff (50 ml/min) gestrippt. Anschließend wurden 33,3 g Propylenoxid bei 60°C in den Reaktor gegeben. Hierbei stieg der Druck auf 0,48 bar an. Der Reaktorinhalt wurde dann bei diesem Druck und 60°C noch 60 min gerührt. Danach wurde auf 130°C erwärmt, wobei der Druck auf 1,2 bar anstieg. Die nachfolgende Aktivierung des DMC-Katalysators machte sich durch einen beschleunigten Druckabfall bemerkbar. Weitere 2763,1 g Propylenoxid wurden nach erfolgter Katalysatoraktivierung mit konstant 703 g/h in den Autoklav dosiert. Nach Dosierung von insgesamt 75 g Propylenoxid (inklusive der zur Katalysatoraktivierung eingesetzten Menge) wurde die Dosierung von 869,9 g Propylenglykol (enthaltend 280 ppm Wasser und 106 ppm Phosphorsäure) mit einer konstanten Dosierrate von 250 g/h gestartet. Nach Ende der Propylenoxidzudosierung ließ man noch 20 min bei 130°C nachreagieren und heizte das Produkt schließlich bei 130°C im Vakuum 30 min aus. Der maximale Propylenoxidpartialdruck, ermittelt aus der Differenz zwischen dem maximalen Reaktordruck und dem am Ende der Nachreaktionsphase erreichten Druckniveau, betrug 0,85 bar. Die OH-Zahl des Produktes betrug 348,5 mg KOH/g.

In der nachfolgenden Tabelle sind die Versuchsparameter und die Versuchsergebnisse der Beispiele 15 bis 18 zusammengefasst.

| **Beispiel** | **Konditionierung** | **Konditionierungstemperatur [°C]** | **Konditionierungszeit [min]** | **Katalysatorkonzentration [ppm], bez. auf Endprodukt** | **OH-Zahl [mg KOH/g]** | **Max. Propylenoxidpartialdruck [bar]** |
|---|---|---|---|---|---|---|
| 15 | Ja | 60 | 90 | 103 | 347,7 | 1,26 |
| 16 (Vergleich) | Nein | - | - | 103 | Reaktionsabbruch | Reaktionsabbruch |
| 17 | Ja | 60 | 90 | 120 | 347,6 | 1,50 |
| 18 | Ja | 60 | 90 | 110 | 348,5 | 0,85 |

## Patentansprüche

1. Verfahren zur Konditionierung von Doppelmetallcyanid-Katalysatoren, bei dem die Doppelmetallcyanid-Katalysatoren in Startmedien mit einer OH-Zahl von 5 bis 500 mg KOH/g enthaltend Additionsprodukte aus Starterverbindungen mit Zerewitinoff-aktiven Wasserstoffatomen und Alkylenoxiden und/oder Poly(ester)polyole und/oder Polycarbonatpolyole und/oder hydroxylierte Triglyceride und/oder hydroxylierte Fettsäurederivate bei einer Temperatur von 0°C bis 80°C über eine Zeitdauer von 5 Minuten bis 4 Stunden bei Drücken von 1 mbar bis 10 bar dispergiert werden.

2. Verfahren gemäß Anspruch 1, bei dem die Konditionierung unter Inertgasatmosphäre durchgeführt wird.

3. Verfahren gemäß Anspruch 1, bei dem die Konditionierung unter einer Inertgas und Alkylenoxid enthaltenden Atmosphäre durchgeführt wird.

4. Verfahren zur Herstellung von Polyetherpolyolen unter kontinuierlicher Dosierung von Starterverbindungen und Alkylenoxiden, bei dem gemäß einem der Ansprüche 1 bis 3 konditionierte DMC-Katalysatoren eingesetzt werden.

5. Kontinuierliches Verfahren zur Herstellung von Polyetherpolyolen unter kontinuierlicher Dosierung von Starterverbindungen, Alkylenoxiden und gemäß Anspruch 2 konditionierten DMC-Katalysatoren.

6. Verfahren zur Herstellung von Polyetherpolyolen, bei dem gemäß einem der Ansprüche 1 bis 3 konditionierte DMC-Katalysatoren eingesetzt werden., wobei die Gesamtmenge der zur Polyetherpolyolherstellung eingesetzten Starterverbindungen bereits während der Konditionierung der DMC-Katalysatoren im Startmedium zugegen ist.

7. Verwendung von nach einem der Ansprüche 4 bis 6 erhältlichen Polyetherpolyolen zur Herstellung von Polyurethanwerkstoffen.
